(19) **Europäisches Patentamt / European Patent Office / Office européen des brevets**

(11) **EP 4 685 795 A1**

(12) **EUROPEAN PATENT APPLICATION**
published in accordance with Art. 153(4) EPC

(43) Date of publication:
28.01.2026 Bulletin 2026/05

(21) Application number: 24795754.1

(22) Date of filing: 28.03.2024

(51) International Patent Classification (IPC):
*G10L 21/02* (2013.01)    *G10L 21/0208* (2013.01)
*H04N 21/2187* (2011.01)    *H04N 21/233* (2011.01)
*H04N 21/439* (2011.01)

(52) Cooperative Patent Classification (CPC):
Y02T 90/00

(86) International application number:
PCT/CN2024/084593

(87) International publication number:
WO 2024/222373 (31.10.2024 Gazette 2024/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 23.04.2023 CN 202310442701

(71) Applicant: BIGO TECHNOLOGY PTE. LTD.
Singapore 117440 (SG)

(72) Inventors:
• CHEN, Hongnan
  Guangzhou, Guangdong 511442 (CN)
• WEI, Shanyi
  Hangzhou, Zhejiang 311100 (CN)
• LIU, Liang
  Guangzhou, Guangdong 511442 (CN)

(74) Representative: Yang, Shu
Withers & Rogers LLP
2 London Bridge
London SE1 9RA (GB)

(54) **AUDIO NOISE REDUCTION METHOD AND APPARATUS, DEVICE, STORAGE MEDIUM AND PRODUCT**

(57)    Provided in the embodiments of the present application are an audio noise reduction method and apparatus, a device, a storage medium and a product. The technical solution provided by the embodiments of the present application comprises: by means of a first noise reduction model, performing first noise reduction processing on a noisy amplitude spectrum of an audio to be processed, so as to obtain first noise-reduced audio information in which steady noise has been suppressed; performing noise reduction processing on the first noise-reduced audio according to a scenario type, so as to obtain second noise-reduced audio information in which music has been retained and unsteady noise has been suppressed or third noise-reduced audio information in which unsteady noise has been suppressed; and performing phase noise reduction and enhancement processing on the second noise-reduced audio information or the third noise-reduced audio information according to the scenario type corresponding to the audio to be processed, so as to obtain a target noise-reduced audio. Thus, the resource waste caused by independent noise reduction of background music and vocals is reduced, the influence on the noise reduction capability in a non-music scenario is weakened while the background music is retained, the audio noise reduction effect in a live broadcast scenario can be effectively improved, and the user experience is optimized.

FIG. 1

## Description

The present disclosure claims priority to Chinese Patent Application No. 202310442701.X, filed on April 23, 2023, the disclosure of which is herein incorporated by reference in its entirety.

## TECHNICAL FIELD

Embodiments of the present disclosure relate to the field of audio processing technologies, and in particular, relate to an audio noise reduction method, apparatus, device, a storage medium, and a product.

## BACKGROUND

In network live streaming scenarios, many streamers play background music while speaking. In this case, the audio information collected by the microphone contains human voice, background music, and noise. It is necessary to suppress noise while preserving the human voice and background music to enhance the user's viewing experience.
Since human voice and background music differ significantly in features such as bandwidth and fundamental frequency, and the main target currently preserved by noise reduction algorithms is the human voice, directly applying noise reduction algorithms designed for human voice to live streaming scenarios will damage the background music, resulting in a poor audio noise reduction effect and adversely affecting user experience.

## SUMMARY

Embodiments of the present disclosure provide an audio noise reduction method, apparatus, device, a storage medium, and a product, so as to solve the technical problem in the related art where noise reduction algorithms mainly target scenarios with only human voice, resulting in poor noise reduction effects in live broadcast scenarios and adversely affecting user experience. According to the present disclosure, noise reduction effects in live streaming scenarios are effectively improved, and user experience is optimized.
According to a first aspect, the embodiments of the present disclosure provide an audio noise reduction method. The method includes:

> acquiring audio to be processed;
> sending the audio to be processed to a first noise reduction model, and performing first noise reduction processing on a noisy magnitude spectrum of the audio to be processed by the first noise reduction model to obtain first noise-reduced audio information in which stationary noise is suppressed;
> performing, based on a scenario type corresponding to the audio to be processed, second noise reduction processing on the first noise-reduced audio information to obtain second noise-reduced audio information in which music is preserved and non-stationary noise is suppressed, or performing third noise reduction processing on the first noise-reduced audio information to obtain third noise-reduced audio information in which non-stationary noise is suppressed; and
> performing, based on the scenario type corresponding to the audio to be processed, phase noise reduction and enhancement processing on the second noise-reduced audio information or the third noise-reduced audio information to obtain target noise-reduced audio.

According to a second aspect, the embodiments of the present disclosure provide an audio noise reduction apparatus. The apparatus includes an audio acquisition module, a first noise reduction module, a second noise reduction module, and an audio enhancement module.
The audio acquisition module is configured to acquire audio to be processed.
The first noise reduction module is configured to: send the audio to be processed to a first noise reduction model, and perform first noise reduction processing on a noisy magnitude spectrum of the audio to be processed by using the first noise reduction model to obtain first noise-reduced audio information in which stationary noise is suppressed.
The second noise reduction module is configured to perform, based on a scenario type corresponding to the audio to be processed, second noise reduction processing on the first noise-reduced audio information to obtain second noise-reduced audio information in which music is preserved and non-stationary noise is suppressed, or perform third noise reduction processing on the first noise-reduced audio information to obtain third noise-reduced audio information in which non-stationary noise is suppressed.
The audio enhancement module is configured to perform, based on the scenario type corresponding to the audio to be processed, phase noise reduction and enhancement processing on the second noise-reduced audio information or the third noise-reduced audio information to obtain target noise-reduced audio.

According to a third aspect, the embodiments of the present disclosure provide an audio noise reduction device. The device includes: a memory and one or more processors.

The memory is configured to store one or more programs.

The one or more programs, when run by the one or more processors, cause the one or more processors to perform the audio noise reduction method as defined in the first aspect.

According to a fourth aspect, the embodiments of the present disclosure provide a non-transitory storage medium storing one or more computer-executable instructions. The one or more computer-executable instructions, when executed by a processor of a computer, cause the computer to perform the audio noise reduction method as defined in the first aspect.

According to a fifth aspect, the embodiments of the present disclosure provide a computer program product. The computer program product includes one or more computer programs stored in a computer-readable storage medium. The one or more computer programs, when read and run by at least one processor of a device from the computer-readable storage medium, cause the device to perform the audio noise reduction method as defined in the first aspect.

According to the embodiments of the present disclosure, the first noise-reduced audio information in which stationary noise is suppressed is obtained by performing the first noise reduction processing on the noisy magnitude spectrum of the audio to be processed using the first noise reduction model. Based on the scenario type, noise reduction processing is performed on the first noise-reduced audio to obtain the second noise-reduced audio information, in which music is preserved and non-stationary noise is suppressed, or the third noise-reduced audio information, in which non-stationary noise is suppressed. Moreover, based on the scenario type corresponding to the audio to be processed, phase noise reduction and enhancement processing are performed on the second noise-reduced audio information or the third noise-reduced audio information to obtain the target noise-reduced audio. By combining the scenario type, the complex noise reduction task is divided into multiple serially connected sub-tasks of lower difficulty. By employing multi-stage audio noise reduction tasks, the noise reduction model is shared across different scenario types, which reduces resource waste caused by independently reducing noise in background music and human voice, and diminishes the adverse impact on the noise reduction capability for a non-music scenario while preserving the background music, thereby effectively improving the audio noise reduction effect in live streaming scenarios, and optimizing the user experience.

**BRIEF DESCRIPTION OF DRAWINGS**

FIG. 1 is a flowchart of an audio noise reduction method according to some embodiments of the present disclosure;

FIG. 2 is a flowchart of another audio noise reduction method according to some embodiments of the present disclosure;

FIG. 3 is a schematic flowchart of first noise reduction processing according to some embodiments of the present disclosure;

FIG. 4 is a schematic flowchart of phase noise reduction and enhancement processing of second noise-reduced audio information according to some embodiments of the present disclosure;

FIG. 5 is a schematic flowchart of phase noise reduction and enhancement processing of third noise-reduced audio information according to some embodiments of the present disclosure;

FIG. 6 is a schematic structural diagram of an audio noise reduction apparatus according to some embodiments of the present disclosure; and

FIG. 7 is a schematic structural diagram of an audio noise reduction device according to some embodiments of the present disclosure.

**DETAILED DESCRIPTION**

For clearer descriptions of the objectives, technical solutions, and advantages of the present disclosure, specific embodiments of the present disclosure are further described in detail below with reference to the accompanying drawings. It should be understood that the specific embodiments described herein are merely used for explaining the present disclosure and are not limitations to the present disclosure. In addition, it should be further noted that for convenience of description, only the portions associated with the present disclosure, rather than the entire content, are shown in the accompanying drawings. Before further discussing exemplary embodiments in detail, it should be noted that some exemplary embodiments are described as processes or methods depicted as flowcharts. Although a flowchart describes operations (or steps) as sequential processing, many of the operations may be performed in parallel, concurrently, or simultaneously. In addition, the order of the operations may be rearranged. The processing may be terminated when the operations are completed, but additional steps not included in the accompanying drawings may also be present. The processing may correspond to a method, a function, a procedure, a subroutine, a subprogram, and the like.

The audio noise reduction method provided according to the present disclosure is applicable to audio noise reduction scenarios, for example, to perform noise reduction processing on audio recorded during live streaming. The purpose is to suppress stationary noise and non-stationary noise in the audio to be processed by using a plurality of noise reduction models based on the scenario type, thereby obtaining damaged audio information (second noise-reduced audio information or third noise-reduced audio information). Moreover, phase noise reduction and enhancement processing are then performed on the damaged audio information to obtain target noise-reduced audio, thereby effectively improving the audio noise reduction effect and optimizing user experience. In the network live streaming, the streamer will play background music while speaking. In this case, the audio collected by the microphone includes human voice, background music, and noise. To improve the audio experience, the audio noise reduction algorithm needs to suppress noise while preserving the human voice and background music. Conventional noise reduction algorithms use conventional signal processing methods and can effectively suppress stationary noise; however, the conventional noise reduction algorithms perform poorly in noise reduction for non-stationary noise scenarios. AI noise reduction algorithms, which use deep learning methods, can generally remove both stationary and non-stationary noise except for human voice. However, human voice and background music differ significantly in features such as bandwidth and fundamental frequency. Currently, the main target preserved by noise reduction algorithms is the human voice. If a noise reduction algorithm designed for scenarios with only human voice is directly applied to scenarios with background music, the background music will be damaged, resulting in a poor audio noise reduction effect and adversely affecting user experience. Based on this, an audio noise reduction method is provided in the embodiments of the present disclosure to solve the technical problem in which the current audio noise reduction solutions for scenarios with only human voice have a poor audio noise reduction effect and adversely affect user experience.

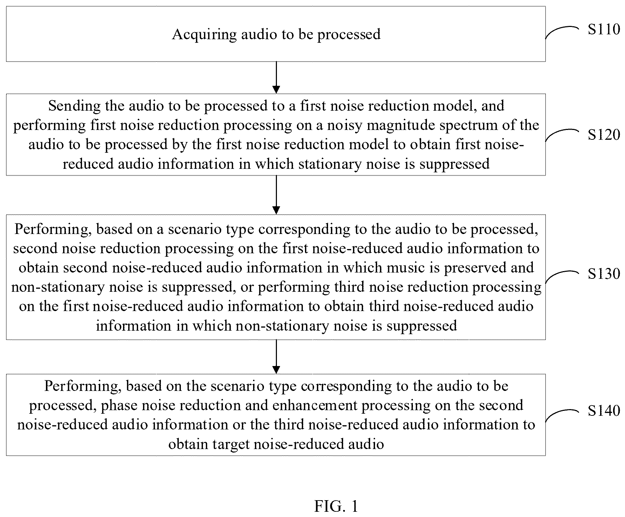

FIG. 1 shows a flowchart of an audio noise reduction method according to some embodiments of the present disclosure. The audio noise reduction method provided according to the embodiments of the present disclosure is applicable to an audio noise reduction apparatus. The audio noise reduction apparatus is implemented through hardware and/or software and integrated into an audio noise reduction device.

The following description takes the example in which the audio noise reduction apparatus performs the audio noise reduction method. Referring to FIG. 1, the audio noise reduction method includes the following steps.

In S110, audio to be processed is acquired.

According to some embodiments, the audio to be processed is obtained by audio recording via a microphone device externally connected to the audio noise reduction device. For example, a streamer may obtain the audio to be processed by recording audio via a microphone configured on a live host device (such as a computer). Alternatively, the audio to be processed is also obtained by audio recording via a built-in microphone module of the audio noise reduction device. For example, in the case that a streamer performs live streaming by using a mobile terminal such as a mobile phone or tablet, the audio to be processed is obtained by audio recording via the microphone module configured on the mobile terminal.

Exemplarily, the audio to be processed for which noise reduction processing is required is acquired. In some embodiments, the audio to be processed is obtained through real-time recording. In some embodiments, the audio noise reduction device is connected to an audio output device (such as a loudspeaker) through wired and/or wireless means and plays background music through the audio output device. In some embodiments, in the case that the streamer is speaking without playing background music, the recorded audio to be processed generally includes human voice and noise; in the case that the streamer is speaking while playing background music, the recorded audio to be processed generally includes human voice, background music, and noise.

In S120, the audio to be processed is sent to a first noise reduction model, and first noise reduction processing is performed on a noisy magnitude spectrum of the audio to be processed by the first noise reduction model to obtain first noise-reduced audio information in which stationary noise is suppressed.

In the solution, one or more of a first noise reduction model, a second noise reduction model, a third noise reduction model, and an audio enhancement model is configured in the audio noise reduction device in various combinations. According to some embodiments, the first noise reduction model is configured to perform first noise reduction processing on the magnitude spectrum of the audio, thereby suppressing stationary noise in the magnitude spectrum. In some embodiments, the first noise reduction model is a noise reduction model constructed based on a conventional noise reduction algorithm.

Exemplarily, after obtaining the audio to be processed, the audio to be processed is sent to the first noise reduction model, and the first noise reduction model will perform first noise reduction processing on the noisy magnitude spectrum of the audio to be processed, thereby obtaining the first noise-reduced audio information in which stationary noise is suppressed. In some embodiments, the first noise-reduced audio information output by the first noise reduction model preserves human voice, background music, and non-stationary noise.

In some embodiments, a short-time Fourier transform is first performed on the audio to be processed to obtain the noisy magnitude spectrum, and then the noisy magnitude spectrum of the audio to be processed is sent to the first noise reduction model for the first noise reduction processing. Alternatively, the complete audio to be processed is sent directly to the first noise reduction model, then a short-time Fourier transform is performed on the audio to be processed by the first noise reduction model to obtain the noisy magnitude spectrum, and first noise reduction processing is performed on the noisy magnitude spectrum. The first noise-reduced audio information is the audio obtained after noise reduction processing is performed on the audio to be processed (including magnitude spectrum information and phase spectrum information). The stationary noise in the magnitude spectrum of the audio has been suppressed during the noise reduction processing, and in this case, the phase spectrum information in the first noise-reduced audio information has not undergone noise reduction processing.

In S130, based on a scenario type corresponding to the audio to be processed, second noise reduction processing is performed on the first noise-reduced audio information to obtain second noise-reduced audio information in which music is preserved and non-stationary noise is suppressed, or third noise reduction processing is performed on the first noise-reduced audio information to obtain third noise-reduced audio information in which non-stationary noise is suppressed.

According to some embodiments, the scenario type includes the music type and the non-music type, where the music type is understood as a scenario in which the streamer plays background music via an audio output device, and the non-music type is understood as a scenario in which the streamer does not play background music via an audio output device.

In the audio noise reduction method according to some embodiments, performing, based on the scenario type corresponding to the audio to be processed, the second noise reduction processing on the first noise-reduced audio information to obtain the second noise-reduced audio information in which music is preserved and non-stationary noise is suppressed, or performing the third noise reduction processing on the first noise-reduced audio information to obtain the third noise-reduced audio information in which non-stationary noise is suppressed, includes: performing, in the case that the scenario type corresponding to the audio to be processed is a music type, the second noise reduction processing on the first noise-reduced audio information to obtain the second noise-reduced audio information in which music is preserved and non-stationary noise is suppressed; or performing, in the case that the scenario type corresponding to the audio to be processed is a non-music type, the third noise reduction processing on the first noise-reduced audio information to obtain the third noise-reduced audio information in which non-stationary noise is suppressed.

Exemplarily, after performing the first noise reduction processing on the audio to be processed, there may be residual non-stationary noise present in the first noise-reduced audio information. In the case that the scenario type of the audio to be processed is a music type, for example, when the streamer plays background music while live streaming, the recorded audio to be processed includes human voice, background music, and noise. After performing the first noise reduction processing on the audio to be processed, the second noise reduction processing is performed on the first noise-reduced audio information to obtain the second noise-reduced audio information in which music is preserved and non-stationary noise is suppressed. In the case that the scenario type of the audio to be processed is a non-music type, for example, when the streamer is live streaming without playing background music, the recorded audio to be processed includes human voice and noise without background music. After performing the first noise reduction processing on the audio to be processed, the third noise reduction processing is performed on the first noise-reduced audio information to obtain the third noise-reduced audio information in which non-stationary noise is suppressed. According to the embodiments, second noise reduction processing and third noise reduction processing are performed on the first noise-reduced audio information according to the music scenario and the non-music scenario, respectively, thereby obtaining noise-reduced audio in which audio information corresponding to the scenario type is preserved and non-stationary noise is suppressed. The two types of scenarios share the model, which effectively avoids resource waste caused by independently reducing noise in background music and human voice, and diminishes the adverse impact on the noise reduction capability for the non-music scenario while preserving background music, thereby improving the noise reduction effect in live streaming scenarios.

According to some embodiments, performing the second noise reduction processing on the first noise-reduced audio information to obtain the second noise-reduced audio information in which music is preserved and non-stationary noise is suppressed includes: sending the first noise-reduced audio information to a second noise reduction model, and performing noise reduction processing on the first noise-reduced audio information by the second noise reduction model to obtain the second noise-reduced audio information in which music is preserved and non-stationary noise is suppressed.

In some embodiments, the audio noise reduction device is configured with a trained second noise reduction model. The second noise reduction model is constructed based on a neural network, using audio information containing non-stationary noise (which is audio information that has undergone first noise reduction processing by the first noise reduction model) as input, and using noise-reduced audio information, in which music is preserved and non-stationary noise is suppressed, as output for training.

Exemplarily, in the case that the scenario type corresponding to the audio to be processed is a music type, the first noise-reduced audio output by the first noise reduction model is sent to the second noise reduction model, and noise reduction processing is performed on the first noise-reduced audio information by the second noise reduction model to obtain second noise-reduced audio information in which music is preserved and non-stationary noise is suppressed. The second noise-reduced audio information is used as damaged audio information in the music scenario type for subsequent phase noise reduction and enhancement processing. According to the embodiments, the second noise reduction processing is performed on the first noise-reduced audio information by the second noise reduction model, such that the human voice and background music in the audio are effectively preserved while the non-stationary noise in the audio is suppressed.

According to some embodiments, performing the third noise reduction processing on the first noise-reduced audio information to obtain the third noise-reduced audio information in which non-stationary noise is suppressed includes: sending the first noise-reduced audio information to a second noise reduction model, and performing noise reduction processing on the first noise-reduced audio information by the second noise reduction model to obtain the second noise-reduced audio information in which music is preserved and non-stationary noise is suppressed; and sending the second noise-reduced audio information to a third noise reduction model, and performing noise reduction processing on the second noise-reduced audio information by the third noise reduction model to obtain the third noise-reduced audio information in which non-stationary noise is further suppressed.

In some embodiments, the audio noise reduction device is configured with a trained second noise reduction model and a third noise reduction model. The second noise reduction model reuses the second noise reduction model provided above; that is, the same second noise reduction model is shared in both the music scenario and the non-music scenario. The third noise reduction model is constructed based on a neural network, using audio information containing non-stationary noise (which is audio information that has undergone second noise reduction processing by the second noise reduction model) as input, and using noise-reduced audio information, in which non-stationary noise is suppressed, as output for training.

Exemplarily, in the case that the scenario type corresponding to the audio to be processed is a non-music type, the first noise-reduced audio output by the first noise reduction model is sent to the second noise reduction model, and noise reduction processing is performed on the first noise-reduced audio information by the second noise reduction model to obtain second noise-reduced audio information in which music is preserved and non-stationary noise is suppressed. In some embodiments, the second noise-reduced audio information output by the second noise reduction model is sent to the third noise reduction model, and noise reduction processing is performed on the second noise-reduced audio information by the third noise reduction model to obtain third noise-reduced audio information in which non-stationary noise is suppressed. The third noise-reduced audio is used as damaged audio information in the non-music scenario type for subsequent phase noise reduction and enhancement processing. According to the embodiments, noise reduction processing is performed on the first noise-reduced audio information by the second noise reduction model, and noise reduction processing is performed on the second noise-reduced audio information by the third noise reduction model, such that the human voice in the audio is effectively preserved while the non-stationary noise in the audio is further suppressed. Meanwhile, according to the embodiments, the second noise reduction model is shared under different scenario types, such that the resource waste caused by independently reducing noise in background music and human voice is reduced while the background music is preserved, and the noise reduction capability in the non-music scenario is improved.

In some embodiments, after performing noise reduction processing on the first noise-reduced audio information by using the second noise reduction model, it is determined, based on the scenario type, whether it is necessary to perform noise reduction processing on the second noise-reduced audio information by using the third noise reduction model. Alternatively, the scenario type is determined first, and then it is determined, based on the scenario type, whether to perform noise reduction processing on the first noise-reduced audio information by using only the second noise reduction model, or to perform noise reduction processing on the first noise-reduced audio information by using both the second noise reduction model and the third noise reduction model in combination.

According to the embodiments, the second noise reduction model is configured to perform noise reduction processing on the magnitude spectrum of the audio, thereby suppressing non-stationary noise in the magnitude spectrum. According to some embodiments, the second noise reduction model and the third noise reduction model are AI noise reduction models, i.e., noise reduction models trained through neural network learning that can suppress non-stationary noise in the magnitude spectrum.

Exemplarily, after performing the first noise reduction processing on the audio to be processed to obtain the first noise-reduced audio information, the first noise-reduced audio information is sent to the trained second noise reduction model. The second noise reduction model performs noise reduction processing on the first noise-reduced audio information to obtain second noise-reduced audio information in which music is preserved and non-stationary noise is suppressed.

In some embodiments, the audio information sent to the second noise reduction model is the complete first noise-reduced audio information. The second noise reduction model performs a short-time Fourier transform on the first noise-reduced audio information to obtain a noisy magnitude spectrum, and then performs noise reduction processing on the noisy magnitude spectrum of the first noise-reduced audio information. Alternatively, a short-time Fourier transform is performed first on the first noise-reduced audio information to obtain a noisy magnitude spectrum, and then the noisy magnitude spectrum of the first noise-reduced audio information is sent to the second noise reduction model for noise reduction processing. The noise reduction processing performed on the audio information by the first noise reduction model and/or the second noise reduction model can preserve background music and human voice-related features in the audio information and suppress noise-related features.

The second noise-reduced audio information is the audio obtained after noise reduction processing is performed on the first noise-reduced audio information (including magnitude spectrum information and phase spectrum information). The non-stationary noise in the magnitude spectrum of the audio has been suppressed during the noise reduction processing, while the phase spectrum information has not undergone noise reduction processing.

According to the embodiments, the third noise reduction model is configured to perform noise reduction processing on the magnitude spectrum of the audio, thereby further suppressing non-stationary noise in the magnitude spectrum. Exemplarily, after the second noise reduction model performs noise reduction processing on the first noise-reduced audio information to obtain the second noise-reduced audio information, the second noise-reduced audio information is sent to a trained third noise reduction model. The third noise reduction model performs noise reduction processing on the second noise-reduced audio information to obtain third noise-reduced audio information in which non-stationary noise is further suppressed.

In some embodiments, the audio information sent to the third noise reduction model is the complete second noise-reduced audio information. The third noise reduction model performs a short-time Fourier transform on the second noise-reduced audio information to obtain a noisy magnitude spectrum, and then performs noise reduction processing on the noisy magnitude spectrum of the second noise-reduced audio information. Alternatively, a short-time Fourier transform is performed first on the second noise-reduced audio information to obtain a noisy magnitude spectrum, and then the noisy magnitude spectrum of the second noise-reduced audio information is sent to the third noise reduction model for noise reduction processing. The third noise reduction model performs noise reduction processing on the audio information, such that the human voice in the audio is preserved and non-stationary noise is further suppressed.

The third noise-reduced audio information is the audio obtained after noise reduction processing is performed on the second noise-reduced audio information (including magnitude spectrum information and phase spectrum information). The non-stationary noise in the magnitude spectrum of the audio has been further suppressed during the noise reduction processing, while the phase spectrum information has not undergone noise reduction processing.

In S140, based on the scenario type corresponding to the audio to be processed, phase noise reduction and enhancement processing are performed on the second noise-reduced audio information or the third noise-reduced audio information to obtain target noise-reduced audio.

Exemplarily, after performing noise reduction processing on the first noise-reduced audio information to obtain the second noise-reduced audio information or the third noise-reduced audio information, the scenario type corresponding to the audio to be processed is determined, and phase noise reduction and enhancement processing are performed on the second noise-reduced audio information or the third noise-reduced audio information based on the scenario type corresponding to the audio to be processed to obtain the target noise-reduced audio.

The phase noise reduction processing of the second noise-reduced audio information or the third noise-reduced audio information is understood as noise reduction processing of the phase spectrum corresponding to the second noise-reduced audio information or the third noise-reduced audio information. In some embodiments, the enhancement processing of the second noise-reduced audio information is restoration processing of the fundamental frequency and harmonics in the magnitude spectrum of the second noise-reduced audio information; alternatively, the enhancement processing of the third noise-reduced audio information is restoration processing of the fundamental frequency and harmonics in the magnitude spectrum of the third noise-reduced audio information.

In some embodiments, the corresponding phase noise reduction and enhancement processing methods are determined according to the sounds to be preserved and the noise to be suppressed in different scenario types. For example, for a music type, phase noise reduction and enhancement processing are performed on the second noise-reduced audio information to obtain the target noise-reduced audio, while for a non-music type, phase noise reduction and enhancement processing are performed on the third noise-reduced audio information to obtain the target noise-reduced audio.

In some embodiments, phase noise reduction and enhancement processing are performed on the second noise-reduced audio information or the third noise-reduced audio information by a trained audio enhancement model. Based on this, performing, based on the scenario type corresponding to the audio to be processed, phase noise reduction and enhancement processing on the second noise-reduced audio information or the third noise-reduced audio information to obtain the target noise-reduced audio includes: sending, in the case that the scenario type corresponding to the audio to be processed is a music type, the second noise-reduced audio information to an audio enhancement model, and performing phase noise reduction and enhancement processing on the second noise-reduced audio information by the audio enhancement model to obtain the target noise-reduced audio; or sending, in the case that the scenario type corresponding to the audio to be processed is a non-music type, the third noise-reduced audio information to an audio enhancement model, and performing phase noise reduction and enhancement processing on the third noise-reduced audio information by the audio enhancement model to obtain the target noise-reduced audio.

As described above, the first noise-reduced audio information in which stationary noise is suppressed is obtained by performing the first noise reduction processing on the noisy magnitude spectrum of the audio to be processed using the first noise reduction model. Based on the scenario type, noise reduction processing is performed on the first noise-reduced audio to obtain the second noise-reduced audio information, in which music is preserved and non-stationary noise is suppressed, or the third noise-reduced audio information, in which non-stationary noise is suppressed. Moreover, based on the scenario type corresponding to the audio to be processed, phase noise reduction and enhancement processing are performed on the second noise-reduced audio information or the third noise-reduced audio information to obtain the target noise-reduced audio. By combining the scenario type, the complex noise reduction task is divided into multiple serially connected sub-tasks of lower difficulty. By employing multi-stage audio noise reduction tasks, the noise reduction model is shared across different scenario types, which reduces resource waste caused by independently reducing noise in background music and human voice, and diminishes the adverse impact on the noise reduction capability for a non-music scenario while preserving the background music, thereby effectively improving the audio noise reduction effect in live streaming scenarios, and optimizing the user experience.

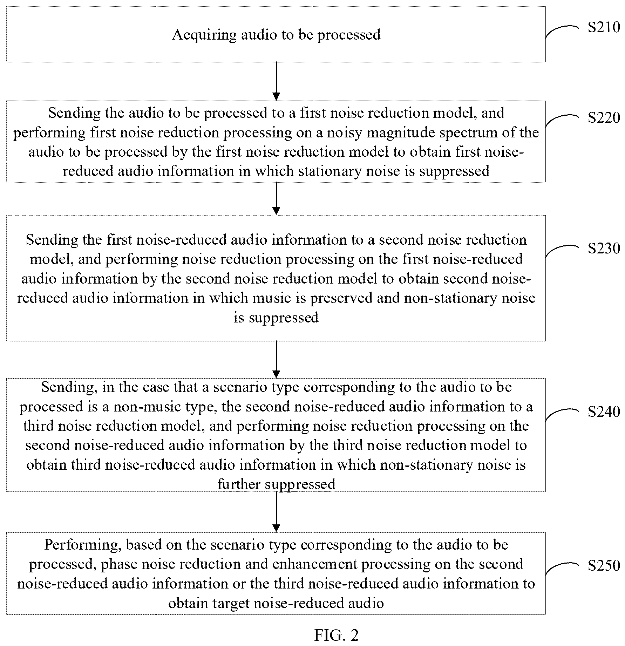

Based on the above embodiments, FIG. 2 shows a flowchart of another audio noise reduction method according to some embodiments of the present disclosure. The audio noise reduction method is a specific implementation of the audio noise reduction method described above. Referring to FIG. 2, the audio noise reduction method includes the following steps.

In S210, audio to be processed is acquired.

In S220, the audio to be processed is sent to a first noise reduction model, and first noise reduction processing is performed on a noisy magnitude spectrum of the audio to be processed by the first noise reduction model to obtain first noise-reduced audio information in which stationary noise is suppressed.

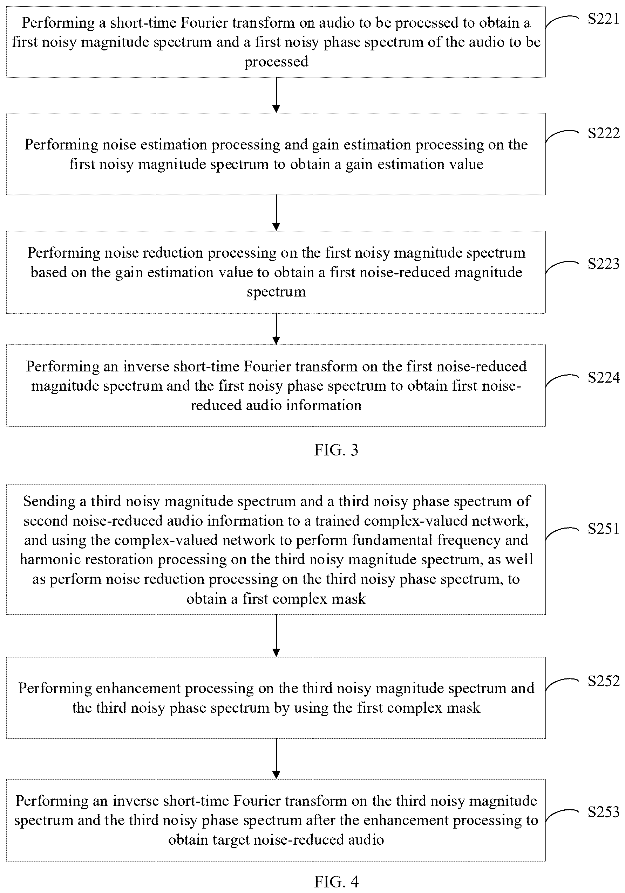

In some embodiments, as shown in the schematic flowchart of first noise reduction processing provided in FIG. 3, performing the first noise reduction processing on the noisy magnitude spectrum of the audio to be processed by the first noise reduction model to obtain the first noise-reduced audio information in which stationary noise is suppressed includes steps S221 to S224.

In S221, a short-time Fourier transform is performed on the audio to be processed to obtain a first noisy magnitude spectrum and a first noisy phase spectrum of the audio to be processed.

In S222, noise estimation processing and gain estimation processing are performed on the first noisy magnitude spectrum to obtain a gain estimation value.

In S223, based on the gain estimation value, noise reduction processing is performed on the first noisy magnitude spectrum to obtain a first noise-reduced magnitude spectrum.

In S224, an inverse short-time Fourier transform is performed on the first noise-reduced magnitude spectrum and the first noisy phase spectrum to obtain the first noise-reduced audio information.

Exemplarily, after obtaining the audio to be processed, a short-time Fourier transform is performed on the audio to be processed to obtain a first noisy magnitude spectrum and a first noisy phase spectrum of the audio to be processed. In some embodiments, the short-time Fourier transform of the audio to be processed is performed outside the first noise reduction model; that is, the first noisy magnitude spectrum and the first noisy phase spectrum are obtained by performing a short-time Fourier transform on the audio to be processed, and then the first noisy magnitude spectrum and/or the first noisy phase spectrum are submitted to the first noise reduction model for first noise reduction processing.

In some embodiments, the first noise reduction model performs noise estimation processing and gain estimation processing on the first noisy magnitude spectrum to obtain a gain estimation value, and then, based on the gain estimation value, performs noise reduction processing on the first noisy magnitude spectrum to obtain the first noise-reduced magnitude spectrum.

For example, the first noise reduction model obtains a noise estimate of the first noisy magnitude spectrum by using methods such as quantile noise estimation, and calculates the speech probability of the first noisy magnitude spectrum or the audio to be processed by using the noise estimate. Furthermore, an accurate noise estimate of the current frame of the first noisy magnitude spectrum or the audio to be processed is obtained, and based on the noise estimate, the gain estimation value is determined by using gain estimation methods such as Wiener filtering.

In some embodiments, the first noise reduction model performs noise reduction processing on the first noisy magnitude spectrum based on the determined gain estimation value to obtain the first noise-reduced magnitude spectrum. For example, the gain estimation value is multiplied by the first noisy magnitude spectrum to obtain the first noise-reduced magnitude spectrum, thereby realizing the noise reduction processing of the first noisy magnitude spectrum. After obtaining the first noise-reduced magnitude spectrum, an inverse short-time Fourier transform is performed on the first noise-reduced magnitude spectrum and the first noisy phase spectrum to obtain the first noise-reduced audio information. In this case, the first noise-reduced audio information records a second noisy magnitude spectrum (i.e., the first noise-reduced magnitude spectrum) and the information corresponding to a second noisy phase spectrum. The first noise reduction model does not perform noise reduction processing on the first noisy phase spectrum of the audio to be processed, and the second noisy phase spectrum is consistent with the first noisy phase spectrum. The second noisy magnitude spectrum, relative to the first noisy magnitude spectrum, suppresses stationary noise, but there still exists non-stationary noise.

In some embodiments, the inverse short-time Fourier transform of the first noise-reduced magnitude spectrum and the first noisy phase spectrum is performed by the first noise reduction model; that is, the first noise-reduced audio information is directly output by the first noise reduction model. Alternatively, after the first noise reduction model performs noise reduction processing on the first noisy magnitude spectrum and outputs the first noise-reduced magnitude spectrum, the inverse short-time Fourier transform of the first noise-reduced magnitude spectrum and the first noisy phase spectrum is performed outside the first noise reduction model.

According to the embodiments, a short-time Fourier transform is performed on the audio to be processed to obtain a first noisy magnitude spectrum and a first noisy phase spectrum; noise estimation processing and gain estimation processing are performed on the first noisy magnitude spectrum to obtain a gain estimation value. Moreover, based on the gain estimation value, noise reduction processing is performed on the first noisy magnitude spectrum to obtain a first noise-reduced magnitude spectrum with suppressed stationary noise. After performing an inverse short-time Fourier transform on the first noise-reduced magnitude spectrum and the first noisy phase spectrum, the first noise-reduced audio information in which stationary noise is suppressed can be obtained, thereby achieving suppression of stationary noise in the audio to be processed and effectively improving the signal-to-noise ratio of the audio to be processed. According to the embodiments, the first noise reduction model adopts a conventional noise reduction model, which reduces the training cost, memory cost, and computational resource cost for the noise reduction model.

In S230, the first noise-reduced audio information is sent to a second noise reduction model, and noise reduction processing is performed on the first noise-reduced audio information by the second noise reduction model to obtain second noise-reduced audio information in which music is preserved and non-stationary noise is suppressed.

According to some embodiments, performing noise reduction processing on the first noise-reduced audio information by the second noise reduction model to obtain the second noise-reduced audio information in which music is preserved and non-stationary noise is suppressed includes: acquiring a second noisy magnitude spectrum of the first noise-reduced audio information, inputting the first noise-reduced audio information into a trained first noise reduction neural network, and performing noise reduction processing on the second noisy magnitude spectrum by using the first noise reduction neural network to obtain a second noise-reduced magnitude spectrum with suppressed non-stationary noise. The input to the first noise reduction neural network and the second noise reduction neural network is the complete audio information, and the object to be processed in the audio information is the magnitude spectrum corresponding to the audio information.

According to the embodiments, the second noise reduction model is constructed and trained based on the first noise reduction neural network. The first noise reduction neural network may be trained and obtained based on a first noisy sample audio and a first clean sample audio containing a human voice and music (i.e., background music). For example, the first noisy sample audio is used as the input to the first noise reduction neural network, and the first clean sample audio is used as the output of the first noise reduction neural network to train the first noise reduction neural network. In some embodiments, prior to inputting the first noisy sample audio into the first noise reduction neural network, feature extraction is performed on the first noisy sample audio to improve the noise reduction performance of the network. The extracted feature includes a magnitude spectrum, a bark-frequency cepstral coefficients (BFCC) feature, a fundamental frequency feature, or the like. Moreover, the magnitude spectrum of the first clean sample audio containing a human voice and background music is used as the label for the network output. The loss value used in the training process serves as the reference for updating network parameters, and the loss function is the mean square error (MSE), the signal to distortion ratio (SDR), or the like. According to the embodiments, the second noise reduction model is trained with the first noisy sample audio and the first clean sample audio containing a human voice and music, such that the second noise reduction model effectively suppresses non-stationary noise in the audio while preserving the human voice and background music in the audio.

According to some embodiments, performing noise reduction processing on the first noise-reduced audio information by the second noise reduction model to obtain the second noise-reduced audio information in which music is preserved and non-stationary noise is suppressed includes: acquiring a second noisy magnitude spectrum of the first noise-reduced audio information, and performing noise reduction processing on the second noisy magnitude spectrum to obtain the second noise-reduced audio information in which music is preserved and non-stationary noise is suppressed.

Exemplarily, the second noise reduction model acquires the second noisy magnitude spectrum of the first noise-reduced audio information and inputs the first noise-reduced audio information into the trained second noise reduction model; noise reduction processing is performed on the second noisy magnitude spectrum by the second noise reduction model to obtain a second noise-reduced magnitude spectrum with suppressed non-stationary noise. In some embodiments, the input to the second noise reduction model is the complete first noise-reduced audio information; alternatively, a short-time Fourier transform is performed first on the first noise-reduced audio information to obtain the second noisy magnitude spectrum and the second noisy phase spectrum of the first noise-reduced audio information, then the second noisy magnitude spectrum is input into the second noise reduction model, and noise reduction processing is performed on the second noisy magnitude spectrum by the second noise reduction model.

In some embodiments, after obtaining the second noise-reduced magnitude spectrum, the second noise-reduced audio information in which music is preserved and non-stationary noise is suppressed is obtained based on the second noise-reduced magnitude spectrum and the second noisy phase spectrum; in this case, the second noise-reduced audio information records a third noisy magnitude spectrum (i.e., the second noise-reduced magnitude spectrum) and a third noisy phase spectrum. The second noise reduction model does not perform noise reduction processing on the second noisy phase spectrum of the first noise-reduced audio information. The third noisy phase spectrum is consistent with the second noisy phase spectrum, and the third noisy magnitude spectrum suppresses non-stationary noise relative to the second noisy magnitude spectrum. In a non-music type scenario, there still exists the possibility that the third noisy magnitude spectrum retains noise similar to the background music.

Exemplarily, after obtaining the second noise-reduced audio information, the scenario type corresponding to the audio to be processed is further determined. In some embodiments, the scenario type corresponding to the audio to be processed is determined based on whether background music is enabled at the corresponding streamer terminal (for example, the audio noise reduction device) or in the live-streaming room; alternatively, the scenario type corresponding to the audio to be processed is determined by a scenario classification module configured by the live-streaming application, where the scenario classification model is trained and obtained based on a classification model. According to the embodiments, the scenario types corresponding to the audio to be processed include the music type and the non-music type. Based on this, in the solution, after obtaining the second noise-reduced audio information, in the case that the scenario type corresponding to the audio to be processed is a non-music type, the process proceeds to step S240; in the case that the scenario type corresponding to the audio to be processed is a music type, the process proceeds to step S250.

In S240, in the case that the scenario type corresponding to the audio to be processed is a non-music type, the second noise-reduced audio information is sent to a third noise reduction model, and noise reduction processing is performed on the second noise-reduced audio information by the third noise reduction model to obtain third noise-reduced audio information in which non-stationary noise is further suppressed.

Exemplarily, in the case that the scenario type corresponding to the audio to be processed is a non-music type, the second noise-reduced audio information may contain noise similar to background music. The second noise-reduced audio information needs to be sent to a trained third noise reduction model, and noise reduction processing is performed on the second noise-reduced audio information by the third noise reduction model to obtain the third noise-reduced audio information, thereby further suppressing noise in the audio information that is similar to the background music in the non-music scenario.

According to some embodiments, performing noise reduction processing on the second noise-reduced audio information by the third noise reduction model to obtain the third noise-reduced audio information includes: acquiring a third noisy magnitude spectrum of the second noise-reduced audio information, inputting the second noise-reduced audio information into a trained second noise reduction neural network, and performing noise reduction processing on the third noisy magnitude spectrum by using the second noise reduction neural network to obtain a third noise-reduced magnitude spectrum with preserved human voice.

According to the embodiments, the third noise reduction model is constructed and trained based on the second noise reduction neural network. The second noise reduction neural network is trained and obtained based on a first noise-reduced sample audio and a second clean sample audio containing a human voice. The first noise-reduced sample audio provided in the solution is obtained by performing noise reduction processing on the second noisy sample audio using the second noise reduction model. For example, in order to train the second noise reduction neural network, the first noise-reduced sample audio is used as the input to the second noise reduction neural network, and the second clean sample audio is used as the output of the second noise reduction neural network. In some embodiments, prior to inputting the first noise-reduced sample audio into the second noise reduction model, feature extraction is performed on the first noise-reduced sample audio to improve the noise reduction performance of the network. According to the embodiments, the third noise reduction model is trained by using the first noise-reduced sample audio and the second clean sample audio, which effectively reduces the residual noise in the second noise-reduced audio information in the non-music scenario.

Exemplarily, the third noise reduction model acquires the third noisy magnitude spectrum of the second noise-reduced audio information and inputs the second noise-reduced audio information into the trained second noise reduction neural network; noise reduction processing is performed on the third noisy magnitude spectrum via the second noise reduction neural network to obtain a third noise-reduced magnitude spectrum with preserved human voice. In some embodiments, the input to the third noise reduction model is the complete second noise-reduced audio information; alternatively, a short-time Fourier transform is performed first on the second noise-reduced audio information to obtain the third noisy magnitude spectrum and the third noisy phase spectrum of the second noise-reduced audio information, then the third noisy magnitude spectrum is input into the third noise reduction model, and noise reduction processing is performed on the third noisy magnitude spectrum by the third noise reduction model.

In some embodiments, the third noise-reduced audio information is determined based on the third noise-reduced magnitude spectrum and the third noisy phase spectrum. The third noise-reduced audio information records a fourth noisy magnitude spectrum (i.e., the third noise-reduced magnitude spectrum) and a fourth noisy phase spectrum. The third noise reduction model does not perform noise reduction processing on the third noisy phase spectrum of the second noise-reduced audio information. The fourth noisy phase spectrum is consistent with the third noisy phase spectrum, and the fourth noisy magnitude spectrum suppresses noise similar to the background music relative to the third noisy magnitude spectrum. According to the embodiments, noise reduction processing is performed on the second noise-reduced audio information in the non-music type by the third noise reduction model, such that residual noise in the second noise-reduced audio that is similar to the background music is effectively suppressed, and the audio noise reduction effect is improved.

In S250, based on the scenario type corresponding to the audio to be processed, phase noise reduction and enhancement processing are performed on the second noise-reduced audio information or the third noise-reduced audio information to obtain target noise-reduced audio.

According to some embodiments, performing, based on the scenario type corresponding to the audio to be processed, phase noise reduction and enhancement processing on the second noise-reduced audio information or the third noise-reduced audio information to obtain the target noise-reduced audio includes: sending, in the case that the scenario type corresponding to the audio to be processed is a music type, the second noise-reduced audio information to an audio enhancement model, and performing phase noise reduction and enhancement processing on the second noise-reduced audio information by the audio enhancement model to obtain the target noise-reduced audio; or sending, in the case that the scenario type corresponding to the audio to be processed is a non-music type, the third noise-reduced audio information to an audio enhancement model, and performing phase noise reduction and enhancement processing on the third noise-reduced audio information by the audio enhancement model to obtain the target noise-reduced audio.

According to some embodiments, performing, by the audio enhancement model, phase noise reduction and enhancement processing on the second noise-reduced audio information or the third noise-reduced audio information to obtain the target noise-reduced audio includes: sending a damaged noisy magnitude spectrum and a damaged noisy phase spectrum of damaged audio information to a trained complex-valued network, and using the complex-valued network to perform fundamental frequency and harmonic restoration processing on the damaged noisy magnitude spectrum, as well as perform noise reduction processing on the damaged noisy phase spectrum, to obtain a complex mask, where the damaged audio information is the second noise-reduced audio information or the third noise-reduced audio information; performing enhancement processing on the damaged audio information by using the complex mask to obtain enhanced audio information; and performing an inverse short-time Fourier transform on the enhanced audio information to obtain the target noise-reduced audio.

In the case that the scenario type corresponding to the audio to be processed is a music type, the corresponding damaged audio information is the second noise-reduced audio information, and the corresponding damaged noisy magnitude spectrum and damaged noisy phase spectrum are the third noisy magnitude spectrum and the third noisy phase spectrum. In the case that the scenario type corresponding to the audio to be processed is a non-music type, the corresponding damaged audio information is the third noise-reduced audio information, and the corresponding damaged noisy magnitude spectrum and damaged noisy phase spectrum are the fourth noisy magnitude spectrum and the fourth noisy phase spectrum.

Exemplarily, the damaged noisy magnitude spectrum and the damaged noisy phase spectrum of the damaged audio information are sent to the trained complex-valued network. The complex-valued network is used to perform fundamental frequency and harmonic restoration processing on the damaged noisy magnitude spectrum, as well as perform noise reduction processing on the damaged noisy phase spectrum, to obtain the complex mask.

In some embodiments, the audio enhancement model uses the determined complex mask to perform enhancement processing on the damaged noisy magnitude spectrum and the damaged noisy phase spectrum. For example, the complex mask is used to perform multiplication processing on the damaged noisy magnitude spectrum and addition processing on the damaged noisy phase spectrum. In some embodiments, an inverse short-time Fourier transform is performed on the damaged noisy magnitude spectrum and the damaged noisy phase spectrum after the enhancement processing to obtain the target noise-reduced audio.

In some embodiments, in the case that the scenario type corresponding to the audio to be processed is a music type, since during the noise reduction processing of the first noise-reduced audio information by the second noise reduction model to obtain the second noise-reduced audio information, the background music in the first noise-reduced audio is preserved, and the main features of the human voice and background music are preserved, the audio enhancement model is directly used to perform phase noise reduction and enhancement processing on the second noise-reduced audio information to restore the fundamental frequency and harmonics in the second noise-reduced audio information, which helps improve the estimation of the audio phase and enhance audio quality. According to the embodiments, in the case that the scenario type corresponding to the audio to be processed is a music type, phase noise reduction and enhancement processing are performed on the second noise-reduced audio information by the audio enhancement model to obtain the target noise-reduced audio, thereby effectively restoring the fundamental frequency and harmonics of the human voice and background music and improving the audio quality.

In some embodiments, as shown in the schematic flowchart of phase noise reduction and enhancement processing of the second noise-reduced audio information provided in FIG. 4, performing phase noise reduction and enhancement processing on the second noise-reduced audio information by the audio enhancement model to obtain the target noise-reduced audio includes steps S251 to S253.

In S251, the third noisy magnitude spectrum and the third noisy phase spectrum of the second noise-reduced audio information are sent to the trained complex-valued network, and the complex-valued network is used to perform fundamental frequency and harmonic restoration processing on the third noisy magnitude spectrum, as well as perform noise reduction processing on the third noisy phase spectrum, to obtain a first complex mask.

In S252, enhancement processing is performed on the third noisy magnitude spectrum and the third noisy phase spectrum by using the first complex mask.

In S253, an inverse short-time Fourier transform is performed on the third noisy magnitude spectrum and the third noisy phase spectrum after the enhancement processing to obtain the target noise-reduced audio.

Exemplarily, the third noisy magnitude spectrum and the third noisy phase spectrum of the second noise-reduced audio information are sent to the trained complex-valued network, and the complex-valued network is used to perform fundamental frequency and harmonic restoration processing on the third noisy magnitude spectrum, as well as perform noise reduction processing on the third noisy phase spectrum, to obtain the first complex mask.

According to the embodiments, the audio enhancement model is constructed and trained based on a complex-valued network, where the complex-valued network can, in the time-frequency domain, acquire the frequency-domain correlation of the audio by means of two-dimensional convolution or self-attention mechanism, which can effectively restore the fundamental frequency and harmonics of the magnitude spectrum and facilitate the estimation of clean phase, thereby improving audio quality.

In some embodiments, the audio enhancement model uses the determined first complex mask to perform enhancement processing on the third noisy magnitude spectrum and the third noisy phase spectrum. For example, the first complex mask is used to perform multiplication processing on the third noisy magnitude spectrum and addition processing on the third noisy phase spectrum. In some embodiments, an inverse short-time Fourier transform is performed on the third noisy magnitude spectrum and the third noisy phase spectrum after the enhancement processing to obtain the target noise-reduced audio.

In some embodiments, the inverse short-time Fourier transform of the third noisy magnitude spectrum and the third noisy phase spectrum is performed by the audio enhancement model; that is, the audio enhancement model directly outputs the target noise-reduced audio. Alternatively, after the audio enhancement model outputs the third noisy magnitude spectrum and the third noisy phase spectrum, the inverse short-time Fourier transform processing is performed on the third noisy magnitude spectrum and the third noisy phase spectrum outside the audio enhancement model.

In some embodiments, in the case that the scenario type corresponding to the audio to be processed is a non-music type, after noise reduction processing is performed on the second noise-reduced audio information by the third noise reduction model to obtain the third noise-reduced audio information, and the third noise-reduced audio information suppresses noise similar to the background music, the audio enhancement model is then used to perform phase noise reduction and enhancement processing on the third noise-reduced audio information to restore the fundamental frequency and harmonics in the third noise-reduced audio information, thereby facilitating the estimation of the audio phase and improving audio quality. According to the embodiments, in the case that the scenario type corresponding to the audio to be processed is a music type, phase noise reduction and enhancement processing are performed on the third noise-reduced audio information by the audio enhancement model to obtain the target noise-reduced audio, thereby effectively restoring the fundamental frequency and harmonics of the human voice and background music and improving the audio quality.

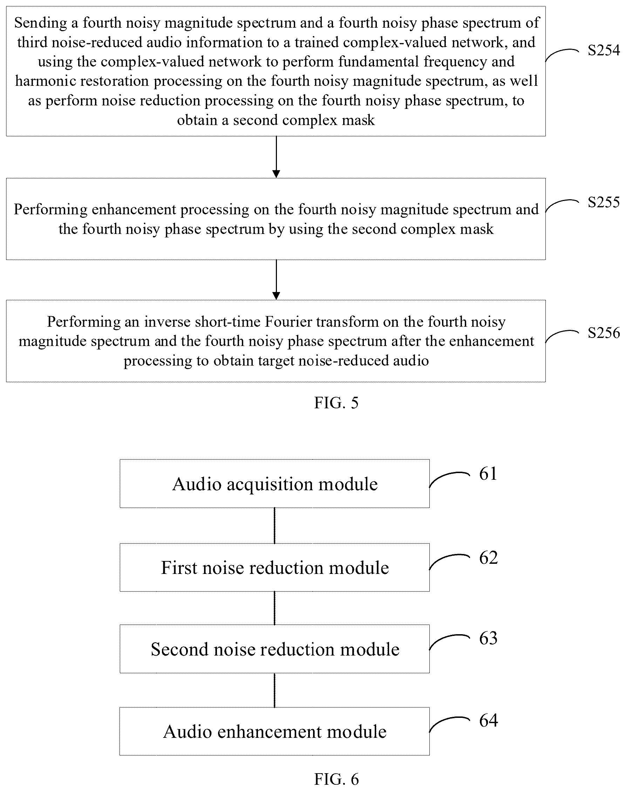

In some embodiments, as shown in the schematic flowchart of phase noise reduction and enhancement processing of the third noise-reduced audio information provided in FIG. 5, performing phase noise reduction and enhancement processing on the third noise-reduced audio information by the audio enhancement model to obtain the target noise-reduced audio includes steps S271 to S273.

In S254, the fourth noisy magnitude spectrum and the fourth noisy phase spectrum of the third noise-reduced audio information are sent to the trained complex-valued network, and the complex-valued network is used to perform fundamental frequency and harmonic restoration processing on the fourth noisy magnitude spectrum, as well as perform noise reduction processing on the fourth noisy phase spectrum, to obtain a second complex mask.

In S255, enhancement processing is performed on the fourth noisy magnitude spectrum and the fourth noisy phase spectrum by using the second complex mask.

In S256, an inverse short-time Fourier transform is performed on the fourth noisy magnitude spectrum and the fourth noisy phase spectrum after the enhancement processing to obtain the target noise-reduced audio.

Exemplarily, the fourth noisy magnitude spectrum and the fourth noisy phase spectrum of the third noise-reduced audio information are sent to the trained complex-valued network, and the complex-valued network is used to perform fundamental frequency and harmonic restoration processing on the fourth noisy magnitude spectrum, as well as perform noise reduction processing on the fourth noisy phase spectrum, to obtain the second complex mask.

According to the embodiments, the audio enhancement model is constructed and trained based on a complex-valued network, where the complex-valued network can, in the time-frequency domain, acquire the frequency-domain correlation of the audio by means of two-dimensional convolution or self-attention mechanism, which can effectively restore the fundamental frequency and harmonics of the magnitude spectrum and facilitate the estimation of clean phase, thereby improving audio quality.

In some embodiments, the audio enhancement model uses the determined second complex mask to perform enhancement processing on the fourth noisy magnitude spectrum and the fourth noisy phase spectrum. For example, the second complex mask is used to perform multiplication processing on the fourth noisy magnitude spectrum and addition processing on the fourth noisy phase spectrum. In some embodiments, an inverse short-time Fourier transform is performed on the fourth noisy magnitude spectrum and the fourth noisy phase spectrum after the enhancement processing to obtain the target noise-reduced audio.

In some embodiments, the inverse short-time Fourier transform of the fourth noisy magnitude spectrum and the fourth noisy phase spectrum is performed by the audio enhancement model; that is, the audio enhancement model directly outputs the target noise-reduced audio. Alternatively, after the audio enhancement model outputs the fourth noisy magnitude spectrum and the fourth noisy phase spectrum, the inverse short-time Fourier transform processing is performed on the fourth noisy magnitude spectrum and the fourth noisy phase spectrum outside the audio enhancement model.

In some embodiments, a computation method for the complex-valued network is expressed as follows.

$$\mathbf{W} * \mathbf{h} = (\mathbf{A} + i\mathbf{B}) * (\mathbf{x} + i\mathbf{y}) = (\mathbf{A} * \mathbf{x} - \mathbf{B} * \mathbf{y}) + i(\mathbf{B} * \mathbf{x} + \mathbf{A} * \mathbf{y})$$

$\mathbf{h} = \mathbf{x} + i\mathbf{y}$ represents the complex-valued input vector (audio information), and $\mathbf{W} = \mathbf{A} + i\mathbf{B}$ represents the complex-valued weight matrix, with $\mathbf{A}$ and $\mathbf{B}$ being training parameters of the complex-valued network. The complex-valued network can jointly reduce noise in both the magnitude spectrum and the phase spectrum while effectively maintaining the coupling relationship between the magnitude spectrum and the phase spectrum, thereby achieving better noise reduction performance. The output of the complex-valued network is a complex mask $\hat{M}_{t,f} = \left|\hat{M}_{t,f}\right| * e^{-i\theta_{\hat{M}_{t,f}}}$, which is used to enhance the noise-reduced magnitude spectrum $|X_{t,f}|$ and the noisy phase spectrum $\theta_{X_{t,f}}$; that is,

$\hat{Y}_{t,f} = \hat{M}_{t,f} * X_{t,f} = \left|\hat{M}_{t,f}\right| * \left|X_{t,f}\right| * e^{-i\left(\theta_{\hat{M}_{t,f}} + \theta_{X_{t,f}}\right)}$ , where $t$ and $f$ represent the number of frames in the time domain and the number of points in the frequency domain, respectively. An inverse short-time Fourier transform is performed on $\hat{Y}_{t,f}$ to obtain the target noise-reduced audio.

According to some embodiments, the audio enhancement model is trained and obtained based on a second noise-reduced sample audio, a third noise-reduced sample audio, and a third clean sample audio containing a human voice and/or music. The second noise-reduced sample audio according to the embodiments is obtained by performing noise reduction processing on the third noisy sample audio using the second noise reduction model, while the third noise-reduced sample audio is obtained by performing noise reduction processing on the fourth noisy sample audio using the third noise reduction model. For example, in order to train the complex-valued network, the second noise-reduced sample audio and the third noise-reduced sample audio are used as inputs to the complex-valued network, and the third clean sample audio is used as the output of the complex-valued network. In some embodiments, prior to inputting the second noise-reduced sample audio and the third noise-reduced sample audio into the complex-valued network, feature extraction is performed on the second noise-reduced sample audio and the third noise-reduced sample audio to improve the enhancement performance of the network. According to the embodiments, the third noise reduction model is trained with the second noise-reduced sample audio, the third noise-reduced sample audio, and the third clean sample audio, and the audio enhancement model is trained with the corresponding clean audio. The noise-reduced magnitude spectrum and the noisy phase spectrum of the audio is used as input, the frequency-domain correlation is utilized to restore the fundamental frequency and harmonics while effectively estimating the clean phase, thereby improving audio quality.

As described above, the first noise-reduced audio information in which stationary noise is suppressed is obtained by performing first noise reduction processing on the noisy magnitude spectrum of the audio to be processed using the first noise reduction model. Based on the scenario type, noise reduction processing is performed on the first noise-reduced audio to obtain the second noise-reduced audio information, in which music is preserved and non-stationary noise is suppressed, or the third noise-reduced audio information, in which non-stationary noise is suppressed. Moreover, based on the scenario type corresponding to the audio to be processed, phase noise reduction and enhancement processing are performed on the second noise-reduced audio information or the third noise-reduced audio information to obtain the target noise-reduced audio. By combining the scenario type, the complex noise reduction task is divided into multiple serially connected sub-tasks of lower difficulty. First, the first noise reduction model suppresses stationary noise. Then, scenario classification labels are introduced so that the second noise reduction model and the third noise reduction model jointly complete the suppression of non-stationary noise. Finally, the audio enhancement model performs audio enhancement. In a music type scenario, the second noise reduction model suppresses non-stationary noise while preserving the music. In the case that it is determined to be a non-music type scenario, the third noise reduction model performs further noise reduction processing on a noise-reduction result of the second noise reduction model to filter out residual noise and reduce the adverse impact on the noise reduction effect in the non-music scenario. In both non-music and music scenarios, some models are shared, such that resource waste caused by independently reducing noise in background music and human voice is reduced, and the adverse impact on the noise reduction capability for the non-music scenario is diminished while preserving the background music, thereby effectively improving the audio noise reduction effect and optimizing user experience.

FIG. 6 is a schematic structural diagram of an audio noise reduction apparatus according to some embodiments of the present disclosure. Referring to FIG. 6, the audio noise reduction apparatus includes an audio acquisition module 61, a first noise reduction module 62, a second noise reduction module 63, and an audio enhancement module 64.

The audio acquisition module 61 is configured to acquire audio to be processed. The first noise reduction module 62 is configured to send the audio to be processed to a first noise reduction model, and perform first noise reduction processing on a noisy magnitude spectrum of the audio to be processed by using the first noise reduction model to obtain first noise-reduced audio information in which stationary noise is suppressed. The second noise reduction module 63 is configured t: perform, based on a scenario type corresponding to the audio to be processed, second noise reduction processing on the first noise-reduced audio information to obtain second noise-reduced audio information in which music is preserved and non-stationary noise is suppressed, or perform third noise reduction processing on the first noise-reduced audio information to obtain third noise-reduced audio information in which non-stationary noise is suppressed. The audio enhancement module 64 is configured to perform, based on the scenario type corresponding to the audio to be processed, phase noise reduction and enhancement processing on the second noise-reduced audio information or the third noise-reduced audio information to obtain target noise-reduced audio.

As described above, the first noise-reduced audio information in which stationary noise is suppressed is obtained by performing the first noise reduction processing on the noisy magnitude spectrum of the audio to be processed using the first noise reduction model. Based on the scenario type, noise reduction processing is performed on the first noise-reduced audio to obtain the second noise-reduced audio information, in which music is preserved and non-stationary noise is suppressed, or the third noise-reduced audio information, in which non-stationary noise is suppressed. Moreover, based on the scenario type corresponding to the audio to be processed, phase noise reduction and enhancement processing are performed on the second noise-reduced audio information or the third noise-reduced audio information to obtain the target noise-reduced audio. By combining the scenario type, the complex noise reduction task is divided into multiple serially connected sub-tasks of lower difficulty. By employing multi-stage audio noise reduction tasks, the noise reduction model is shared across different scenario types, which reduces resource waste caused by independently reducing noise in background music and human voice, and diminishes the adverse impact on the noise reduction capability for a non-music scenario while preserving the background music, thereby effectively improving the audio noise reduction effect in live streaming scenarios, and optimizing the user experience.

In some embodiments, the second noise reduction module 63 is configured to:

perform, in the case that the scenario type corresponding to the audio to be processed is a music type, second noise reduction processing on the first noise-reduced audio information to obtain the second noise-reduced audio information in which music is preserved and non-stationary noise is suppressed; and

perform, in the case that the scenario type corresponding to the audio to be processed is a non-music type, third noise reduction processing on the first noise-reduced audio information to obtain the third noise-reduced audio information in which non-stationary noise is suppressed.

In some embodiments, the second noise reduction module 63, in the case of performing second noise reduction processing on the first noise-reduced audio information to obtain the second noise-reduced audio information in which music is preserved and non-stationary noise is suppressed, is configured to:
send the first noise-reduced audio information to a second noise reduction model, and perform noise reduction processing on the first noise-reduced audio information by using the second noise reduction model to obtain the second noise-reduced audio information in which music is preserved and non-stationary noise is suppressed.

In some embodiments, the second noise reduction module 63, in the case of performing third noise reduction processing on the first noise-reduced audio information to obtain the third noise-reduced audio information in which non-stationary noise is suppressed, is configured to:

send the first noise-reduced audio information to a second noise reduction model, and perform noise reduction processing on the first noise-reduced audio information by using the second noise reduction model to obtain the second noise-reduced audio information in which music is preserved and non-stationary noise is suppressed; and send the second noise-reduced audio information to a third noise reduction model, and perform noise reduction processing on the second noise-reduced audio information by using the third noise reduction model to obtain the third noise-reduced audio information in which non-stationary noise is further suppressed.

In some embodiments, in the case of performing noise reduction processing on the first noise-reduced audio information by the second noise reduction model to obtain the second noise-reduced audio information in which music is preserved and non-stationary noise is suppressed, is configured to: acquire a second noisy magnitude spectrum of the first noise-reduced audio information, and perform noise reduction processing on the second noisy magnitude spectrum to obtain the second noise-reduced audio information in which music is preserved and non-stationary noise is suppressed.

In some embodiments, in the case of performing noise reduction processing on the second noise-reduced audio information by the third noise reduction model to obtain the third noise-reduced audio information in which non-stationary noise is suppressed, is configured to: acquire a third noisy magnitude spectrum of the second noise-reduced audio information, and perform noise reduction processing on the third noisy magnitude spectrum to obtain a third noise-reduced magnitude spectrum with preserved human voice.

In some embodiments, the audio enhancement module 64 is configured to:

send, in the case that the scenario type corresponding to the audio to be processed is a music type, the second noise-reduced audio information to an audio enhancement model, and perform phase noise reduction and enhancement processing on the second noise-reduced audio information by using the audio enhancement model to obtain the target noise-reduced audio; or
send, in the case that the scenario type corresponding to the audio to be processed is a non-music type, the third noise-reduced audio information to an audio enhancement model, and perform phase noise reduction and enhancement processing on the third noise-reduced audio information by using the audio enhancement model to obtain the target noise-reduced audio.

In some embodiments, in the case of performing the phase noise reduction and enhancement processing on the second noise-reduced audio information or the third noise-reduced audio information by using the audio enhancement model to obtain the target noise-reduced audio, is configured to:

send a damaged noisy magnitude spectrum and a damaged noisy phase spectrum of damaged audio information to a trained complex-valued network, and use the complex-valued network to perform fundamental frequency and harmonic restoration processing on the damaged noisy magnitude spectrum, as well as perform noise reduction processing on the damaged noisy phase spectrum, to obtain a complex mask, where the damaged audio information is the second noise-reduced audio information or the third noise-reduced audio information;
perform enhancement processing on the damaged audio information by using the complex mask to obtain enhanced audio information; and
perform an inverse short-time Fourier transform on the enhanced audio information to obtain the target noise-reduced audio.

It should be noted that, in the embodiments of the audio noise reduction apparatus described above, the various units and modules included are only divided based on functional logic, but are not limited to the above division as long as corresponding functions can be achieved. In addition, the specific names of the functional units are used merely for easy differentiation and do not limit the protection scope of the embodiments of the present disclosure.

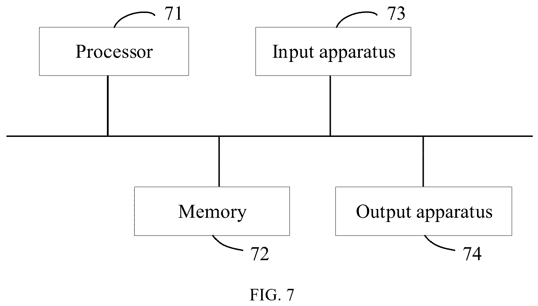

The embodiments of the present disclosure further provide an audio noise reduction device, and the audio noise reduction device integrates the audio noise reduction apparatus provided according to the embodiments of the present disclosure. FIG. 7 is a schematic structural diagram of an audio noise reduction device according to some embodiments of the present disclosure. Referring to FIG. 7, the audio noise reduction device includes: an input apparatus 73, an output apparatus 74, a memory 72, and one or more processors 71. The memory 72 is configured to store one or more programs; the one or more programs, when run by the one or more processors 71, cause the one or more processors 71 to perform the audio noise reduction method as defined in the above embodiments. The audio noise reduction apparatus and device and the computer provided above are configured to perform the audio noise reduction method provided in any one of the above embodiments, and have corresponding functions and beneficial effects.

The embodiments of the present disclosure further provide a non-transitory storage medium storing one or more computer-executable instructions. The one or more computer-executable instructions, when executed by a processor of a computer, cause the computer to perform the audio noise reduction method as defined in the above embodiments. In addition, according to the non-transitory storage medium storing the one or more computer-executable instructions provided in the embodiments of the present disclosure, the one or more computer-executable instructions of the non-transitory storage medium are not limited to the audio noise reduction method provided above, but may also be used to perform related operations in the audio noise reduction method provided in any one of the embodiments of the present disclosure. The audio noise reduction apparatus and device and the storage medium provided in the above embodiments may perform the audio noise reduction method provided in any one of the embodiments of the present disclosure, and for technical details not described in detail in the above embodiments, reference may be made to the audio noise reduction method provided in any one of the embodiments of the present disclosure.

Based on the above embodiments, the embodiments of present disclosure further provide a computer program product. The technical solutions of the present disclosure, in essence or in terms of contributing to the prior art, or all or part of the technical solutions, may be embodied in the form of a software product. The computer program product is stored in a storage medium and includes several instructions for causing a computer device, a mobile terminal, or a processor thereof, to perform all or part of the steps of the audio noise reduction method as provided in the embodiments of the present disclosure.

**Claims**

1. An audio noise reduction method, comprising:

   acquiring audio to be processed;
   sending the audio to be processed to a first noise reduction model, and performing first noise reduction processing on a noisy magnitude spectrum of the audio to be processed by the first noise reduction model to obtain first noise-reduced audio information in which stationary noise is suppressed;
   performing, based on a scenario type corresponding to the audio to be processed, second noise reduction processing on the first noise-reduced audio information to obtain second noise-reduced audio information in which music is preserved and non-stationary noise is suppressed, or performing third noise reduction processing on the first noise-reduced audio information to obtain third noise-reduced audio information in which non-stationary noise is suppressed; and
   performing, based on the scenario type corresponding to the audio to be processed, phase noise reduction and enhancement processing on the second noise-reduced audio information or the third noise-reduced audio information to obtain target noise-reduced audio.

2. The method according to claim 1, wherein performing, based on the scenario type corresponding to the audio to be processed, the second noise reduction processing on the first noise-reduced audio information to obtain the second noise-reduced audio information in which music is preserved and non-stationary noise is suppressed, or performing the third noise reduction processing on the first noise-reduced audio information to obtain the third noise-reduced audio information in which non-stationary noise is suppressed, comprises:

   performing, in a case that the scenario type corresponding to the audio to be processed is a music type, the second noise reduction processing on the first noise-reduced audio information to obtain the second noise-reduced audio information in which music is preserved and non-stationary noise is suppressed; and
   performing, in a case that the scenario type corresponding to the audio to be processed is a non-music type, the third noise reduction processing on the first noise-reduced audio information to obtain the third noise-reduced audio information in which non-stationary noise is suppressed.

3. The method according to claim 2, wherein performing the second noise reduction processing on the first noise-reduced audio information to obtain the second noise-reduced audio information in which music is preserved and non-stationary noise is suppressed, comprises:
   sending the first noise-reduced audio information to a second noise reduction model, and performing noise reduction processing on the first noise-reduced audio information by the second noise reduction model to obtain the second noise-reduced audio information in which music is preserved and non-stationary noise is suppressed.

4. The method according to claim 2, wherein performing the third noise reduction processing on the first noise-reduced audio information to obtain the third noise-reduced audio information in which non-stationary noise is suppressed, comprises:

   sending the first noise-reduced audio information to a second noise reduction model, and performing noise reduction processing on the first noise-reduced audio information by the second noise reduction model to obtain the second noise-reduced audio information in which music is preserved and non-stationary noise is suppressed; and

sending the second noise-reduced audio information to a third noise reduction model, and performing noise reduction processing on the second noise-reduced audio information by the third noise reduction model to obtain the third noise-reduced audio information in which non-stationary noise is further suppressed.

5.  The method according to claim 3 or 4, wherein performing the noise reduction processing on the first noise-reduced audio information by the second noise reduction model to obtain the second noise-reduced audio information in which music is preserved and non-stationary noise is suppressed, comprises:

acquiring a second noisy magnitude spectrum of the first noise-reduced audio information, and performing the noise reduction processing on the second noisy magnitude spectrum to obtain the second noise-reduced audio information in which music is preserved and non-stationary noise is suppressed.

6.  The method according to claim 4, wherein performing the noise reduction processing on the second noise-reduced audio information by the third noise reduction model to obtain the third noise-reduced audio information in which non-stationary noise is suppressed, comprises:

acquiring a third noisy magnitude spectrum of the second noise-reduced audio information, and performing the noise reduction processing on the third noisy magnitude spectrum to obtain a third noise-reduced magnitude spectrum with preserved human voice.

7.  The method according to claim 1, wherein performing, based on the scenario type corresponding to the audio to be processed, the phase noise reduction and enhancement processing on the second noise-reduced audio information or the third noise-reduced audio information to obtain the target noise-reduced audio, comprises:

sending, in a case that the scenario type corresponding to the audio to be processed is a music type, the second noise-reduced audio information to an audio enhancement model, and performing the phase noise reduction and enhancement processing on the second noise-reduced audio information by the audio enhancement model to obtain the target noise-reduced audio; or

sending, in a case that the scenario type corresponding to the audio to be processed is a non-music type, the third noise-reduced audio information to an audio enhancement model, and performing the phase noise reduction and enhancement processing on the third noise-reduced audio information by the audio enhancement model to obtain the target noise-reduced audio.

8.  The method according to claim 7, wherein performing the phase noise reduction and enhancement processing on the second noise-reduced audio information or the third noise-reduced audio information by the audio enhancement model to obtain the target noise-reduced audio, comprises:

sending a damaged noisy magnitude spectrum and a damaged noisy phase spectrum of damaged audio information to a trained complex-valued network, and performing fundamental frequency and harmonic restoration processing on the damaged noisy magnitude spectrum and performing noise reduction processing on the damaged noisy phase spectrum by the complex-valued network to obtain a complex mask, wherein the damaged audio information is the second noise-reduced audio information or the third noise-reduced audio information;

performing the enhancement processing on the damaged audio information by using the complex mask to obtain enhanced audio information; and

performing an inverse short-time Fourier transform on the enhanced audio information to obtain the target noise-reduced audio.

9.  An audio noise reduction apparatus, comprising:

an audio acquisition module, configured to acquire audio to be processed;

a first noise reduction module, configured to send the audio to be processed to a first noise reduction model, and perform first noise reduction processing on a noisy magnitude spectrum of the audio to be processed by using the first noise reduction model to obtain first noise-reduced audio information in which stationary noise is suppressed;

a second noise reduction module, configured to perform, based on a scenario type corresponding to the audio to be processed, second noise reduction processing on the first noise-reduced audio information to obtain second noise-reduced audio information in which music is preserved and non-stationary noise is suppressed, or perform third noise reduction processing on the first noise-reduced audio information to obtain third noise-reduced audio information in which non-stationary noise is suppressed; and

an audio enhancement module, configured to perform, based on the scenario type corresponding to the audio to be processed, phase noise reduction and enhancement processing on the second noise-reduced audio information or the third noise-reduced audio information to obtain target noise-reduced audio.

10. An audio noise reduction device, comprising a memory and one or more processors, wherein

the memory is configured to store one or more programs, and
the one or more programs, when run by the one or more processors, cause the one or more processors to perform the audio noise reduction method as defined in any one of claims 1 to 8.

11. A non-transitory storage medium storing one or more computer-executable instructions, wherein the one or more computer-executable instructions, when executed by a processor of a computer, cause the computer to perform the audio noise reduction method as defined in any one of claims 1 to 8.

12. A computer program product, comprising one or more computer programs, wherein the one or more computer programs, when run by a processor, cause the processor to perform the audio noise reduction method as defined in any one of claims 1 to 8.

Acquiring audio to be processed — S110

Sending the audio to be processed to a first noise reduction model, and performing first noise reduction processing on a noisy magnitude spectrum of the audio to be processed by the first noise reduction model to obtain first noise-reduced audio information in which stationary noise is suppressed — S120

Performing, based on a scenario type corresponding to the audio to be processed, second noise reduction processing on the first noise-reduced audio information to obtain second noise-reduced audio information in which music is preserved and non-stationary noise is suppressed, or performing third noise reduction processing on the first noise-reduced audio information to obtain third noise-reduced audio information in which non-stationary noise is suppressed — S130

Performing, based on the scenario type corresponding to the audio to be processed, phase noise reduction and enhancement processing on the second noise-reduced audio information or the third noise-reduced audio information to obtain target noise-reduced audio — S140

FIG. 1

EP 4 685 795 A1

| | |
|---|---|
| Acquiring audio to be processed | S210 |

↓

| | |
|---|---|
| Sending the audio to be processed to a first noise reduction model, and performing first noise reduction processing on a noisy magnitude spectrum of the audio to be processed by the first noise reduction model to obtain first noise-reduced audio information in which stationary noise is suppressed | S220 |

↓

| | |
|---|---|
| Sending the first noise-reduced audio information to a second noise reduction model, and performing noise reduction processing on the first noise-reduced audio information by the second noise reduction model to obtain second noise-reduced audio information in which music is preserved and non-stationary noise is suppressed | S230 |

↓

| | |
|---|---|
| Sending, in the case that a scenario type corresponding to the audio to be processed is a non-music type, the second noise-reduced audio information to a third noise reduction model, and performing noise reduction processing on the second noise-reduced audio information by the third noise reduction model to obtain third noise-reduced audio information in which non-stationary noise is further suppressed | S240 |

↓

| | |
|---|---|
| Performing, based on the scenario type corresponding to the audio to be processed, phase noise reduction and enhancement processing on the second noise-reduced audio information or the third noise-reduced audio information to obtain target noise-reduced audio | S250 |

FIG. 2

Performing a short-time Fourier transform on audio to be processed to obtain a first noisy magnitude spectrum and a first noisy phase spectrum of the audio to be processed — S221

Performing noise estimation processing and gain estimation processing on the first noisy magnitude spectrum to obtain a gain estimation value — S222

Performing noise reduction processing on the first noisy magnitude spectrum based on the gain estimation value to obtain a first noise-reduced magnitude spectrum — S223

Performing an inverse short-time Fourier transform on the first noise-reduced magnitude spectrum and the first noisy phase spectrum to obtain first noise-reduced audio information — S224

FIG. 3

Sending a third noisy magnitude spectrum and a third noisy phase spectrum of second noise-reduced audio information to a trained complex-valued network, and using the complex-valued network to perform fundamental frequency and harmonic restoration processing on the third noisy magnitude spectrum, as well as perform noise reduction processing on the third noisy phase spectrum, to obtain a first complex mask — S251

Performing enhancement processing on the third noisy magnitude spectrum and the third noisy phase spectrum by using the first complex mask — S252

Performing an inverse short-time Fourier transform on the third noisy magnitude spectrum and the third noisy phase spectrum after the enhancement processing to obtain target noise-reduced audio — S253

FIG. 4

Sending a fourth noisy magnitude spectrum and a fourth noisy phase spectrum of third noise-reduced audio information to a trained complex-valued network, and using the complex-valued network to perform fundamental frequency and harmonic restoration processing on the fourth noisy magnitude spectrum, as well as perform noise reduction processing on the fourth noisy phase spectrum, to obtain a second complex mask

⌒ S254

Performing enhancement processing on the fourth noisy magnitude spectrum and the fourth noisy phase spectrum by using the second complex mask

⌒ S255

Performing an inverse short-time Fourier transform on the fourth noisy magnitude spectrum and the fourth noisy phase spectrum after the enhancement processing to obtain target noise-reduced audio

⌒ S256

FIG. 5

Audio acquisition module ⌒ 61

First noise reduction module ⌒ 62

Second noise reduction module ⌒ 63

Audio enhancement module ⌒ 64

FIG. 6

71

73

Processor

Input apparatus

Memory

72

Output apparatus

74

FIG. 7

## INTERNATIONAL SEARCH REPORT

| International application No. |
| --- |
| **PCT/CN2024/084593** |

| A. | CLASSIFICATION OF SUBJECT MATTER |
| --- | --- |

G10L21/02(2013.01)i; G10L21/0208(2013.01)i; H04N21/2187(2011.01)i; H04N21/233(2011.01)i; H04N21/439(2011.01)i

According to International Patent Classification (IPC) or to both national classification and IPC

| B. | FIELDS SEARCHED |
| --- | --- |

Minimum documentation searched (classification system followed by classification symbols)

IPC:G10L21/02; G10L21/0208; G10L15/22; G10L15/16; H04N21

Documentation searched other than minimum documentation to the extent that such documents are included in the fields searched

Electronic data base consulted during the international search (name of data base and, where practicable, search terms used)

CNTXT, ENTXTC, ENTXT, WPABS, CJFD, CNKI: 音频, 语音, 降噪, 去噪, 增强, 音乐场景, 音乐类型, 直播, 伴奏, 幅度谱, 能量谱, 谱减法, 相位谱, 相位补偿, 相位增强, 稳态噪声, 非稳态噪声, speech, voice, reduc+, noise?, magnitude, phase

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 112908352 A (BIGO TECHNOLOGY PTE. LTD.) 04 June 2021 (2021-06-04) description, paragraphs [0030]-[0100] | 1-12 |
| Y | CN 108735213 A (TAIYUAN UNIVERSITY OF TECHNOLOGY) 02 November 2018 (2018-11-02) description, paragraphs [0066]-[0111] | 1-12 |
| PX | CN 116469402 A (BIGO TECHNOLOGY PTE. LTD.) 21 July 2023 (2023-07-21) description, paragraphs [0029]-[0138] | 1-12 |
| A | CN 114155852 A (BEIJING DAJIA INTERNET INFORMATION TECHNOLOGY CO., LTD.) 08 March 2022 (2022-03-08) entire document | 1-12 |
| A | CN 114694672 A (ALIBABA GROUP HOLDING LIMITED) 01 July 2022 (2022-07-01) entire document | 1-12 |
| A | CN 115440240 A (BESTECHNIC (SHANGHAI) CO., LTD.) 06 December 2022 (2022-12-06) entire document | 1-12 |

☑ Further documents are listed in the continuation of Box C.     ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 June 2024** | **27 June 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/084593** |

### C. DOCUMENTS CONSIDERED TO BE RELEVANT

| Category* | Citation of document, with indication, where appropriate, of the relevant passages | Relevant to claim No. |
|---|---|---|
| A | US 2021012767 A1 (INTEL CORP.) 14 January 2021 (2021-01-14)<br>entire document | 1-12 |
| A | US 2022059112 A1 (DELL PRODUCTS L.P.) 24 February 2022 (2022-02-24)<br>entire document | 1-12 |

Form PCT/ISA/210 (second sheet) (July 2022)

## INTERNATIONAL SEARCH REPORT
### Information on patent family members

| International application No. |
| --- |
| **PCT/CN2024/084593** |

| Patent document cited in search report | | | Publication date (day/month/year) | Patent family member(s) | | | Publication date (day/month/year) |
| --- | --- | --- | --- | --- | --- | --- | --- |
| CN | 112908352 | A | 04 June 2021 | None | | | |
| CN | 108735213 | A | 02 November 2018 | None | | | |
| CN | 116469402 | A | 21 July 2023 | None | | | |
| CN | 114155852 | A | 08 March 2022 | None | | | |
| CN | 114694672 | A | 01 July 2022 | None | | | |
| CN | 115440240 | A | 06 December 2022 | None | | | |
| US | 2021012767 | A1 | 14 January 2021 | NL | 2029039 | B1 | 27 July 2022 |
| | | | | WO | 2022066328 | A1 | 31 March 2022 |
| US | 2022059112 | A1 | 24 February 2022 | US | 11508387 | B2 | 22 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310442701X